# EUROPEAN PATENT SPECIFICATION

(11) **EP 2 811 129 B1**
(45) Date of publication and mention of the grant of the patent: **17.05.2017**
(21) Application number: 12867208.6
(22) Date of filing: 03.02.2012
(51) Int. Cl.: F01N 3/08, F01N 3/023, F01N 3/025, F01N 3/029

(54) **EXHAUST GAS PURIFICATION APPARATUS FOE AN INTERNAL COMBUSTION ENGINE**
ABGASREINIGUNGSVORRICHTUNG FÜR EINEN VERBRENNUNGSMOTOR
DISPOSITIF D'ÉPURATION DES GAZ D'ÉCHAPPEMENT D'UN MOTEUR À COMBUSTION INTERNE

(43) Date of publication of application: 10.12.2014
(73) Proprietor: Toyota Jidosha Kabushiki Kaisha, Toyota-shi, Aichi-ken 471-8571 (JP)
(72) Inventor: ITOH, Kazuhiro, Toyota-shi Aichi 471-8571 (JP); NAKAYAMA, Shigeki, Toyota-shi Aichi 471-8571 (JP); NISHIOKA, Hiromasa, Toyota-shi Aichi 471-8571 (JP); TSUKAMOTO, Yoshihisa, Toyota-shi Aichi 471-8571 (JP); MATSUO, Junichi, Toyota-shi Aichi 471-8571 (JP); IMAI, Daichi, Toyota-shi Aichi 471-8571 (JP); OTSUKI, Hiroshi, Toyota-shi Aichi 471-8571 (JP)
(74) Representative: TBK
(86) International application number: PCT/JP2012/052501
(87) International publication number: WO 2013/114614

(56) References cited:
- EP-A1- 1 741 887
- WO-A1-01/38704
- DE-B3-102004 062 603
- JP-A- H07 127 503
- JP-A- H09 267 025
- JP-A- H11 235 516
- JP-A- H11 257 049
- JP-A- 2010 138 883
- US-A- 5 884 475
- US-A1- 2004 098 975

## Description

### [TECHNICAL FIELD]

The present invention relates to an exhaust gas purification apparatus for an internal combustion engine.

### [BACKGROUND ART]

In a first patent literature, there is described that a solid reducing agent is stored and then supplied to an NOx selective reduction catalyst, after being vaporized by heat of an exhaust gas.

In addition, in a second patent literature, there is described that ammonia (NH₃) gas is supplied to an exhaust passage after being diluted with air. In this second patent literature, there is also described that the concentration of NH₃ after having been diluted with air is detected in the exhaust passage, so that an amount of NH₃ to be supplied is calculated based on the thus detected value of the NH₃ concentration. In addition, there is described that the NH₃ and air is mixed with each other in a mixing device.

Moreover, in a third patent literature, there is described that when the pressure in a tank storing therein gaseous ammonia has decreased, the decrease of the pressure in the tank is suppressed by shortening the valve opening time of a reducing agent addition valve.

However, in cases where a gaseous reducing agent is supplied, there has been a case where when the concentration of the reducing agent is high, it is difficult to adjust the amount of the reducing agent to be supplied in an accurate manner. For example, when the gaseous reducing agent is stored, it is stored at a high pressure in order to reduce the volume thereof. For this reason, a change in the amount of supply of the reducing agent at the time of changing the valve opening time of the reducing agent addition valve becomes large, so it becomes difficult to make the adjustment of the amount of supply of the reducing agent.

In addition, when the reducing agent of high concentration is supplied into the exhaust gas, the reducing agent is small in volume, and hence, it becomes difficult for the reducing agent to disperse in the exhaust gas. In that case, there will occur a variation in the concentration of the reducing agent in a catalyst, so there will be a fear that the removal or reduction rate of NOx may decrease.

US 5 884 475 A discloses that nitrogen oxides emitted by an internal-combustion engine operated with excess air are normally converted by the method of selective catalytic reduction by bringing the nitrogen oxides, together with ammonia, into contact with a selective catalyst. Due to the dangers associated with the use of ammonia, in a motor vehicle ammonia should only be carried in the form of a substance which liberates ammonia, generally an aqueous urea solution. A method and a device for introducing liquid into an exhaust-gas purification system according to the invention avoids frost damage to sections of the system during shutdown times and permits operation of the system at temperatures below the freezing point of the reducing agent solution being used. The method and device include a (thermally insulated) reservoir for the reducing agent liquid and a liquid supply line which is connected thereto and terminates in an outlet opening for the liquid. The reservoir and the liquid supply line can be heated. Furthermore, a heater is provided for liquefying a starting volume which is small as compared with the volume of the reservoir. The liquid supply line may also have a back-flush valve to which a gas that is under pressure can be applied. The supply line can consequently be blown free.

### [PRIOR ART REFERENCES]

### [PATENT LITERATURES]

[First Patent Literature] JP 2010-138883 A
[Second Patent Literature] JP H11-235516 A
[Third Patent Literature] JP 2011-132919A

### [SUMMARY OF THE INVENTION]

### [PROBLEMS TO BE SOLVED BY THE INVENTION]

The present invention has been made in view of the problems as referred to above, and has for its object to supply an additive agent in an appropriate manner.

### [MEANS FOR SOLVING THE PROBLEMS]

In order to achieve the above-mentioned object, an exhaust gas purification apparatus for an internal combustion engine according to claim 1 is provided. The exhaust gas purification apparatus includes
an exhaust gas purification catalyst that is arranged in an exhaust passage of the internal combustion engine;
a tank that stores an additive agent in a solid or a liquid state, which is supplied to said exhaust gas purification catalyst and which acts as a reducing agent or an oxidizing agent;
a vaporization device that vaporizes said solid or liquid additive agent by heating the same; and
a supply passage that is connected between said tank and said exhaust passage at the upstream side of said exhaust gas purification catalyst, with a gaseous additive agent vaporized by said vaporization device flowing therethrough, wherein the gaseous additive agent vaporized by said vaporization device is supplied to said exhaust passage at the upstream side of said exhaust gas purification catalyst;
said exhaust gas purification apparatus comprising:
a dilution device that dilutes said gaseous additive agent with another gas in said supply passage; and
a metering device that adjusts in said supply passage an amount of the additive agent to be supplied from said supply passage to said exhaust passage after being diluted by said dilution device.

The dilution device dilutes the additive agent by supplying the gas different from the additive agent to the gaseous additive agent. The dilution device dilutes the additive agent with the use of an exhaust gas of the internal combustion engine or air, for example.

The dilution device dilutes the additive agent, before the additive agent is supplied from the supply passage to the exhaust passage. By diluting the additive agent by means of the dilution device, the concentration of the additive agent is decreased, so the adjustment of the amount of supply of the additive agent to be supplied becomes easy. That is, the additive agent is diluted at the upstream side of an adjusting device, and hence, the volume of the additive agent adjusted in the metering device becomes relatively large, thus making it possible to enhance accuracy in adjusting the amount of supply of the additive agent. In addition, because the volume of the additive agent becomes large, it becomes easy for the additive agent to disperse into the exhaust gas after being supplied to the exhaust passage.

According to the invention, an adjusting device is arranged in said supply passage at the upstream side of said metering device, for adjusting the temperature or pressure of the additive agent which has been diluted by said dilution device.

The adjusting device may adjust the temperature or pressure of the gaseous additive agent before diluted, or the temperature or pressure of a gas (hereinafter also referred to as a dilution gas) which is supplied by the dilution device. That is, the temperature or pressure of the additive agent after diluted may be adjusted by adjusting the temperature or pressure of the additive agent or the dilution gas before diluted.

Here, there is a fear that only by dilution of the additive agent, the additive agent may condense. In contrast to this, the temperature or pressure of the additive agent is adjusted by the adjusting device, so it is possible to suppress the additive agent from condensing. For example, by making high the temperature of the additive agent after diluted, the condensation of the additive agent can be suppressed. In addition, even if the additive agent condenses, an amount of condensation thereof, which becomes liquid, can be made small. As a result of this, the additive agent can be dispersed over a wide range in the exhaust gas.

Here, note that the temperature of the additive agent may be raised by causing the pressure of the additive agent to go up. That is, because the temperature and the pressure thereof are correlated with each other, the adjusting device need only adjust at least either one of the temperature and the pressure.

Moreover, in the present invention, said adjusting device can adjust the temperature or pressure of said additive agent so that the temperature of the additive agent after being diluted by said dilution device becomes higher than a dew point temperature thereof.

When the temperature of the additive agent after diluted is higher than the dew point temperature thereof, it is possible to suppress the additive agent from condensing in a more reliable manner.

Further, in the present invention, said adjusting device may adjust the temperature of the additive agent after being diluted by said dilution device, and said adjusting device may also make the pressure of the additive agent to be supplied from said supply passage to the exhaust passage lower in cases where the amount of heat required to make the temperature of the additive agent after being diluted by said dilution device higher than the dew point temperature thereof is equal to or greater than a threshold value, than in cases where it is less than the threshold value.

Here, heating the additive agent results in a deterioration of fuel economy. For example, in cases where the temperature of an engine system as a whole is low, such as when the internal combustion engine is cold or ambient air temperature is low, a large amount of heat is required in order to raise the temperature of the additive agent. Thus, in cases where it is judged that heat loss is large, the pressure of the additive agent to be supplied to the exhaust passage is made low. That is, an amount of heat (this may also be electric energy or electric power) for causing the temperature of the additive agent to go up is decreased. As a result of this, the deterioration of fuel economy can be suppressed, or the consumption of electric power can be reduced. In addition, the pressure of the additive agent becomes low, so that it becomes easy to adjust the amount of supply of the additive agent. Here, note that the threshold value referred to herein may also be a value when the deterioration of fuel economy exceeds an allowable range, or when the supply power exceeds an allowable range. In addition, for example, in cases where the temperature of a heating medium, which heats the solid or the liquid additive in the tank, is equal to or less than a threshold value, the pressure of the additive agent may also be made low. Moreover, in cases where an amount of rise in the temperature of the additive agent is equal to or greater than a threshold value, the pressure of the additive agent may also be made low.

### [EFFECT OF THE INVENTION]

According to the present invention, the additive agent can be supplied in a suitable manner.

### [BRIEF DESCRIPTION OF THE DRAWINGS]

[Fig. 1] is a view showing the schematic construction of an exhaust gas purification apparatus for an internal combustion engine according to embodiments of the present invention.
[Fig. 2] is a flow chart showing a flow of heating control for a mixed gas according to a first embodiment.
[Fig. 3] is a view showing the relation between the temperature and pressure of the mixed gas.
[Fig. 4] is a view showing the relation between the electric power supplied to a heating device when heating is carried out by the heating device, and the temperature of the mixed gas after heating.
[Fig. 5] is a flow chart showing a flow of heating control for a mixed gas according to a second embodiment.

### [MODES FOR CARRYING OUT THE INVENTION]

Hereinafter, reference will be made to specific embodiments of an exhaust gas purification apparatus for an internal combustion engine according to the present invention based on the attached drawings.

### < First Embodiment >

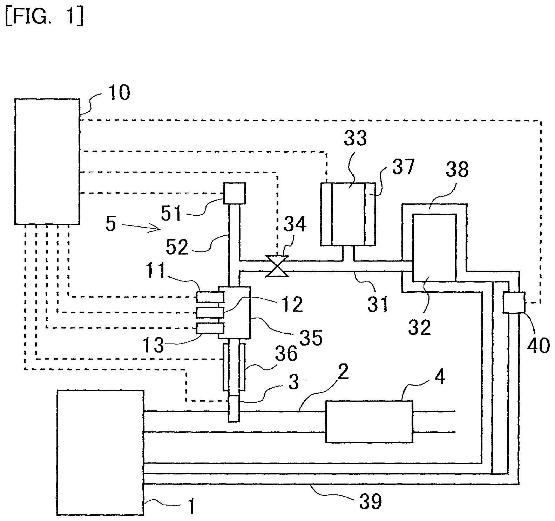

Fig. 1 is a view showing the schematic construction of an exhaust gas purification apparatus for an internal combustion engine according to this first embodiment of the present invention. An internal combustion engine 1 shown in Fig. 1 may be a diesel engine, or may be a gasoline engine.

An exhaust passage 2 is connected to the internal combustion engine 1. In the exhaust passage 2, there are arranged an injection valve 3 and a catalyst 4 in a sequential manner from an upstream side in the direction of flow of an exhaust gas.

The injection valve 3 is opened at the time of injecting an additive agent, and is closed at the time of stopping the injection of the additive agent. The additive agent may also be a reducing agent or an oxidizing agent. What is used for the additive agent is decided according to the kind of the catalyst 4. Then, the additive agent reacts in the catalyst 4. Here, note that in this embodiment, the injection valve 3 corresponds to a metering device in the present invention.

As the catalyst 4, there can be mentioned, for example, an NOx storage reduction catalyst, an NOx selective reduction catalyst, an oxidation catalyst, or a three-way catalyst. In addition, the catalyst 4 may be carried or supported by a particulate filter. Moreover, a particulate filter may be provided at the upstream side or at the downstream side of the catalyst 4. In the case where the NOx selective reduction catalyst is used for the catalyst 4, gaseous ammonia is used as the reducing agent, for example. Also, in the case where the NOx storage reduction catalyst is used for the catalyst 4, HC (propane) gas is used as the reducing agent, for example. Further, in the case where the oxidation catalyst or the three-way catalyst is used for the catalyst 4, HC (propane) gas can be used as the oxidizing agent, for example. In addition, hydrogen peroxide can also be used as the oxidizing agent. Here, note that in this embodiment, the catalyst 4 corresponds to an exhaust gas purification catalyst in the present invention.

Here, note that in this embodiment, the catalyst 4 is composed of the NOx selective reduction catalyst, and the additive agent to be supplied from the injection valve 3 is composed of gaseous ammonia acting as the reducing agent. In that case, the gaseous ammonia injected from the injection valve 3 adsorbs to the catalyst 4. This ammonia serves to reduce NOx in a selective manner. Then, by supplying the ammonia to the catalyst 4 or by making it be adsorbed thereto beforehand, NOx is made to be reduced during the time when the NOx passes through the catalyst 4.

A supply passage 31 is connected at one end thereof to the injection valve 3. The supply passage 31 is connected at the other end thereof to a storage tank 32 which serves to store the reducing agent in a solid or liquid state. This storage tank 32 is provided with a vaporization device 38. Connected to the vaporization device 38 is a cooling water passage 39 of the internal combustion engine 1, through which cooling water of the internal combustion engine 1 circulates. Then, the temperature of the reducing agent is raised by carrying out heat exchange with the cooling water of the internal combustion engine 1. As a result of this, the solid or liquid reducing agent is changed into gas. Then, the gaseous reducing agent flows out into the supply passage 31. The cooling water passage 39 is provided with an adjusting valve 40 which serves to adjust the flow rate of the cooling water. Here, note that in this embodiment, the storage tank 32 corresponds to a tank in the present invention.

In the supply passage 31, there is arranged an auxiliary tank 33, a pressure regulating valve 34, the dilution device 5, a mixing tube 35, and a heating device 36, sequentially from the side of the storage tank 32. The auxiliary tank 33 stores the gaseous reducing agent which has flowed out of the storage tank. The auxiliary tank 33 is provided with a heater 37, which is able to heat and pressurize the gaseous reducing agent. The pressure regulating valve 34 adjusts the pressure of the gaseous reducing agent to be supplied from the storage tank 32 and the auxiliary tank 33. In addition, by closing the pressure regulating valve 34, it is also possible to prevent the backflow of the reducing agent. Here, note that the auxiliary tank 33 and the pressure regulating valve 34 may be omitted.

The dilution device 5 is a device which serves to supply a gas (dilution gas) for diluting the gaseous reducing agent. The dilution device 5 is constructed to be provided with a pump 51 that delivers air, and a dilution gas supply pipe 52 that connects an outlet port of the pump 51 to the supply passage 31. Here, note that the dilution gas supply pipe 52 is connected to the supply passage 31 at a location between the pressure regulating valve 34 and the mixing tube 35.

Here, note that the dilution device 5 may supply, as a dilution gas, a gas compressed by a supercharger which the internal combustion engine 1 is provided with. In addition, the exhaust gas of the internal combustion engine 1, which has been stored, may be supplied as a dilution gas. In this case, the exhaust gas of the internal combustion engine 1 may be supplied under pressure by means of a pump. Further, compressed air used for brakes of a vehicle may also be diverted as a dilution gas. This compressed air may be stored in a tank in advance. Moreover, a gas discharged from a fuel cell may be supplied as a dilution gas. The gas discharged from this fuel cell is limited in its components contained therein, so it is easy to use. Here, note that in cases where moisture is contained in the gas discharged from the fuel cell, the gas may be supplied as a dilution gas after removal of this moisture, in order to suppress the moisture from condensing in the supply passage 31.

The mixing tube 35 promotes mixing of the reducing agent and the dilution gas. The mixing tube 35 is a part of the supply passage 31, and is larger in cross-sectional area than the supply passage 31 at the upstream side and at the downstream side thereof. In the mixing passage 35, there are arranged a pressure sensor 11 for detecting the pressure therein, a temperature sensor 12 for detecting the temperature therein, and an ammonia sensor 13 for detecting the concentration of ammonia (NH₃) therein. Here, note that the dilution gas supply pipe 52 may be connected to the mixing tube 35. In addition, the mixing pipe 35 may not be provided. In this case, the pressure sensor 11, the temperature sensor 12, and the ammonia sensor 13 are directly mounted on the supply passage 31 at the downstream side of the dilution device 5. Moreover, a throttle may be formed in the middle of the dilution gas supply pipe 52, and the reducing agent may be supplied into the dilution gas by making use of a Venturi effect.

The heating device 36 is an electric heater which is provided in the surroundings of the supply passage 31, for example. By supplying electric power to this heating device 36, a mixed gas of the reducing agent and the dilution gas is heated. Here, note that in this embodiment, the heating device 36 corresponds to an adjusting device in the present invention.

In the internal combustion engine 1 constructed as stated above, there is arranged in combination therewith an ECU 10 which is an electronic control unit for controlling the internal combustion engine 1. This ECU 10 controls the internal combustion engine 1 in accordance with the operating conditions of the internal combustion engine 1 and/ or driver's requirements.

In addition, the pressure sensor 11, the temperature sensor 12, and the ammonia sensor 13 are connected to the ECU 10 through electrical wiring, so that the output signals of these sensors are inputted to the ECU 10. On the other hand, the injection valve 3, the pressure regulating valve 34, the heating device 36, the heater 37, the adjusting valve 40 and the pump 51 are connected to the ECU 10 through electrical wiring, so that the ECU 10 controls these component elements.

Moreover, for example, the ECU 10 may also control the amount of the dilution gas to be supplied from the dilution device 5 in a feedback manner, so that the detected value of the ammonia sensor 13 comes close to a target value. In addition, based on the detected value of the ammonia sensor 13, the amount of the reducing agent to be supplied from the injection valve 3 to the exhaust passage 2. That is, the lower the concentration of ammonia, the larger the amount of injection from the injection valve 3 may also be made. Thus, by adjusting the amount of injection from the injection valve 3 based on the ammonia concentration after dilution, the amount of the reducing agent to be supplied to the catalyst 4 can be controlled in a more accurate manner. In addition, even if the ammonia concentration is changed due to abnormality or malfunction of the dilution device 5, the amount of supply of the reducing agent can be controlled by feedback control. Moreover, by the provision of the ammonia sensor 13, the ECU 10 can also detect the abnormality or malfunction of the dilution device 5 or the like.

However, in this embodiment, the gaseous reducing agent of high concentration flows out of the storage tank 32. Then, this reducing agent of high concentration is diluted in the supply passage 31 by the dilution gas supplied from the dilution device 5. As a result of this, the concentration of the reducing agent becomes low, so it becomes easy to adjust the concentration of the reducing agent to be supplied to the catalyst 4.

In addition, there is a fear that the reducing agent may condense in the supply passage 31, due to a temperature drop at the time when the reducing agent is diluted. On the other hand, in this embodiment, provision is made for the heating device 36. That is, if the diluted reducing agent (mixed gas) is heated by the heating device 36, the temperature of the mixed gas will become high. As a result of this, it is possible to suppress the reducing agent from condensing. Here, note that the heating device 36 may be controlled in such a manner that the temperature of the mixed gas becomes higher than the dew point temperature of the reducing agent. At this time, the heating device 36 may also be controlled in a feedback manner so that the temperature detected by the temperature sensor 12 becomes higher than the dew point temperature of the reducing agent. Moreover, the dew point temperature may obtained based on the ammonia concentration detected by the ammonia sensor 13. That is, the lower the dew point temperature of ammonia, the more difficult it becomes for ammonia to condense, so that the ammonia concentration becomes lower. Further, the dew point temperature may be obtained based on the pressure of the mixed gas. That is, when the pressure of the mixed gas becomes low, it becomes difficult for ammonia to condense, so that the dew point temperature of ammonia becomes low. These relations may also have been obtained and made into a map in advance.

Moreover, in this embodiment, the reducing agent is diluted by the dilution device 5. As a result of this, the concentration of the reducing agent becomes low, thus making it possible to suppress the reducing agent from condensing. From the above, the reducing agent can be supplied to the catalyst 4 in a uniform manner.

Here, note that by making high the reducing agent before dilution, or by making high the temperature of the dilution gas in advance, the temperature of the mixed gas may also be made higher than the dew point temperature of the reducing agent. In addition, by compressing the mixed gas or the dilution gas, the temperature thereof may be made high.

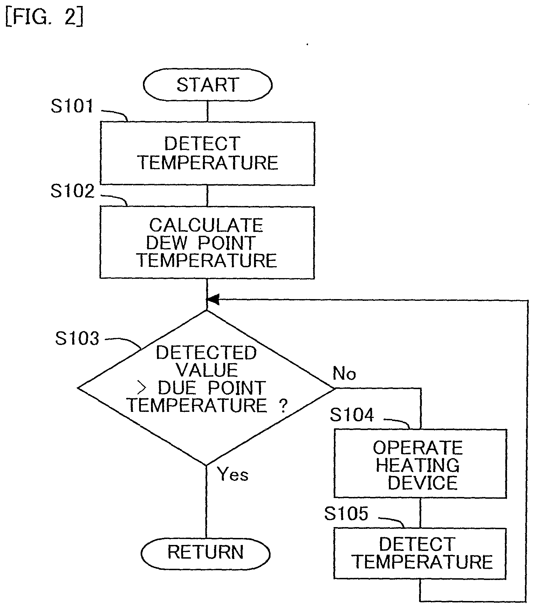

Fig. 2 is a flow chart showing a flow or routine of heating control for a mixed gas according to this embodiment. This routine is carried out by means of the ECU 10 at the time of supplying the reducing agent.

In step S101, the temperature of the mixed gas is detected by the temperature sensor 12.

In step S102, the dew point temperature of the reducing agent is calculated. This dew point temperature is a temperature at which the reducing agent condenses. For example, the relation between the concentration of the reducing agent in the mixed gas and the dew point temperature thereof has been obtained and made into a map in advance, and the dew point temperature may be calculated based on the concentration of the reducing agent in the mixed gas and the map. In addition, the dew point temperature when assuming that the reducing agent is not diluted may has been obtained in advance.

In step S103, it is determined whether the detected value of the temperature detected in step S101 is higher than the dew point temperature calculated in step S102. That is, it is determined whether the reducing agent does not condense. In cases where an affirmative determination is made in step S103, the reducing agent does not condense, and so this routine is ended. On the other hand, in cases where a negative determination is made in step S103, the routine advances to step S104.

In step S104, by operating the heating device 36, the mixed gas is heated. That is, it is made difficult for the reducing agent to condense.

In step S105, the temperature is detected by the temperature sensor 12. After that, the routine returns to step S103.

As described above, according to this embodiment, by diluting the reducing agent before supplying the reducing agent from the injection valve 3 into the exhaust gas, the volume of the reducing agent can be made large, so that the amount of supply of the reducing agent can be adjusted with a high degree of accuracy. In addition, by diluting the reducing agent, the dew point temperature thereof can be made low. Accordingly, it is possible to suppress the reducing agent from condensing. Moreover, the mixed gas is heated by the heating device 36, so it is possible to suppress the reducing agent from condensing to a much more extent. According to these, it is possible to cause the reducing agent to disperse into a wider range in the interior of the exhaust passage 2, so that the purification efficiency of the exhaust gas in the catalyst 4 can be enhanced. Further, it is possible to suppress the liquid reducing agent from adhering to the sensors and so on, and hence it is possible to suppress damage or breakage of the sensors and so on. Furthermore, it is possible to suppress corrosion of other equipment or elements due to the adhesion of the reducing agent thereto.

### < Second Embodiment >

In this second embodiment, in the case where an amount of heat (this may also be electric energy or electric power) required to heat the reducing agent (this may also be the mixed gas) is equal to or greater than a threshold value, the pressure of the mixed gas to be injected from the injection valve 3 is made lower than in the case where the required amount of heat is less than the threshold value. Then, in order to make low the pressure of the mixed gas to be injected from the injection valve 3, the temperature of the mixed gas is set to be lower than that in the first embodiment. As a result of this, a rise in the temperature of the mixed gas is suppressed, and deterioration of fuel economy is suppressed. The other devices and so on are the same as those in the first embodiment, so the explanation thereof is omitted.

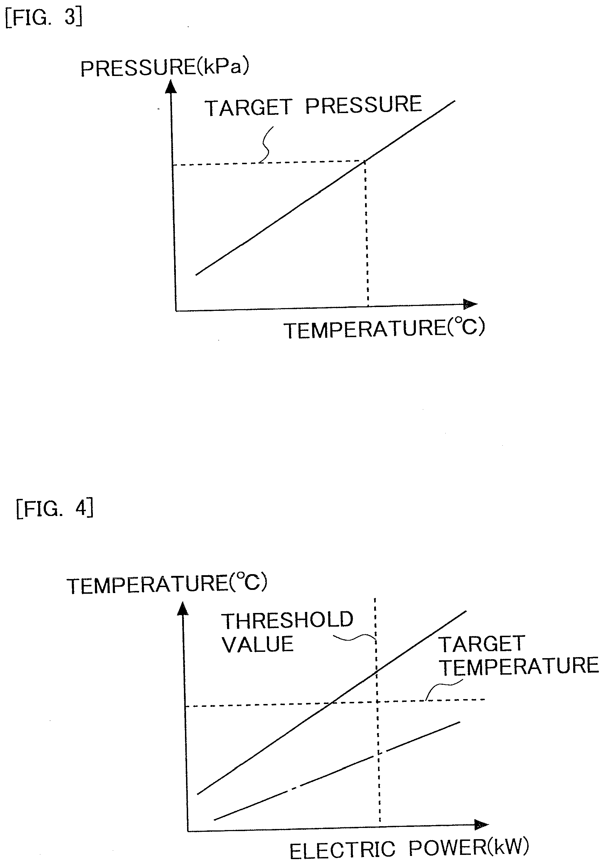

Here, Fig. 3 is a view showing the relation between the temperature and pressure of the mixed gas. The higher the temperature of the mixed gas, the higher the pressure of the mixed gas becomes. Then, when the temperature of the mixed gas reaches a certain value, the pressure of the mixed gas will reach a target pressure. This target pressure is a target value of the pressure of the mixed gas to be injected from the injection valve 3. Here, the lower the temperature of the mixed gas before heating, the larger becomes the electric power or electric energy which is required for raising the pressure of the mixed gas to the target pressure. For example, when the electric power to be supplied to the heating device 36 is made to change according to the temperature of the mixed gas at the time the mixed gas passes through the heating device 36, the electric power to be supplied becomes larger as the temperature of the mixed gas is lower. In addition, in cases where the temperature of the mixed gas is adjusted by adjusting a period of time to supply electric power to the heating device 36, while making constant the electric power to be supplied to the heating device 36, the lower the temperature of the mixed gas, the longer becomes the period of time to supply electric power, so electric energy becomes large.

Fig. 4 is a view showing the relation between the electric power supplied to the heating device 36 when heating is carried out by the heating device 36, and the temperature of the mixed gas after heating. A solid line represents a case where the temperature of the cooling water in the internal combustion engine 1 is relatively high, and an alternate long and short dash line represents a case where the temperature of the cooling water of the internal combustion engine 1 is relatively low.

In cases where the temperature of the cooling water in the internal combustion engine 1 is relatively low, the temperature of the reducing agent flowing out of the storage tank 32 also becomes low, and hence, even if the same electric power is supplied as in the case where the temperature of the cooling water in the internal combustion engine 1 is relatively high, the temperature of the mixed gas after heating becomes low. For this reason, the electric power required for raising the temperature of the mixed gas to the target temperature becomes larger as the temperature of the cooling water in the internal combustion engine 1 is lower. That is, in cases where the temperature of the cooling water in the internal combustion engine 1 is low, the electric power required for heating the mixed gas to a required temperature or pressure becomes large, as a result of which there is a fear that fuel economy may get worse.

In contrast to this, in this embodiment, when the electric power required to raise the temperature of the mixed gas to the target temperature becomes equal to or greater than the threshold value, the electric power to be supplied is limited to the threshold. Here, note that an upper limit may be set for the electric power to be supplied. This threshold value is a value at the time when the electric power is on the boundary of whether to exceed an allowable range. Then, in cases where the temperature of the internal combustion engine 1 is relatively high, the threshold value is electric power which can heat the reducing agent to a sufficient temperature to suppress condensation of the reducing agent. In addition, in cases where the temperature of the internal combustion engine 1 is relatively low, the threshold value is also electric power which is not enough to suppress condensation of the reducing agent. Here, note that electric energy may be used in place of electric power. In this manner, the temperature of the mixed gas is made not to rise to the target temperature. In that case, the temperature of the mixed gas becomes low, so the pressure of the mixed gas to be injected from the injection valve 3 becomes low.

Here, note that after actually calculating the electric power required to raise the temperature of the mixed gas to the target temperature, it may be determined whether to limit the electric power, by making a comparison of the electric power thus calculated with the threshold value, but instead, the determination as to whether to limit the electric power may be made based on the temperature of the cooling water in the internal combustion engine 1 or the temperature of the mixed gas. For example, in cases where the temperature of the cooling water in the internal combustion engine 1 is equal to or less than a threshold value, or in cases where the temperature of the mixed gas is equal to or less than the threshold value, the electric power to be supplied is limited to the threshold value. In addition, in cases where an amount of rise in the temperature of the mixed gas is equal to or greater than a threshold value, the electric power to be supplied is limited to the threshold value. This decreases the temperature and pressure of the mixed gas to be supplied from the injection valve 3.

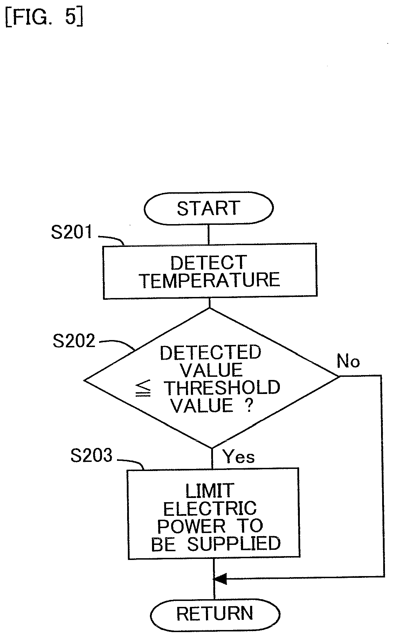

Fig. 5 is a flow chart showing a flow or routine of heating control for the mixed gas according to this embodiment. This routine is carried out by means of the ECU 10 at the time of supplying the reducing agent.

In step S201, the temperature of the mixed gas is detected by the temperature sensor 12. Here, note that the temperature of the cooling water in the internal combustion engine 1 may instead be detected.

In step S202, it is determined whether the temperature detected in step S201 is equal to or less than its threshold value. The threshold value referred to herein is set as a value at which the electric power to be supplied for heating the mixed gas to the required temperature exceeds the allowable range. That is, the threshold value is set to a value at the time when the deterioration of fuel economy exceeds the allowable range. This value has been beforehand obtained through experiments, etc., and stored in the ECU 10. In cases where an affirmative determination is made in step S202, the routine advances to step S203.

Then, in step S203, the electric power to be supplied is limited. Here, the electric power to be supplied is set to be a threshold value which is shown in Fig. 4. In this case, the temperature of the mixed gas does not become high, so there is a fear that the reducing agent may condense. However, in order to suppress the condensation, electric power consumption becomes too much large, and hence, priority is given to the suppression of the deterioration of fuel economy over the suppression of condensation of the reducing agent. Here, note that the electric power to be supplied may be set to a value which is lower than the threshold value. The electric power to be supplied, which is set at this time, may be decided based on the temperature of the cooling water in the internal combustion engine 1 or the temperature of the mixed gas. The threshold value may be decided according to which and how much priority is given between the suppression of the deterioration of fuel economy, and the suppression of condensation of the reducing agent.

On the other hand, in cases where a negative determination is made in step S202, the mixed gas is heated, as in the first embodiment.

Here, in cases where the amount of heat to be supplied for heating the mixed gas becomes large, such as under the condition of cryogenic temperature, etc., there is a fear that the required amount of heat may not be able to be supplied, or the deterioration of fuel economy or shortage of the remaining capacity of a battery may be caused due to an increase in the electric power consumption. In particular, in cases where the auxiliary tank 33 is not provided, or in cases where the auxiliary tank 33, if provided, is not equipped with the heater 37, the electric power or electric energy, which is required for heating the mixed gas by means of the heating device 36, becomes large. On the other hand, by limiting the electric power or electric energy, it is possible to reduce the energy for heating the mixed gas.

In addition, by making the pressure of the mixed gas low, it is possible to enhance accuracy in the adjustment of the amount of supply of the mixed gas. For this reason, it is possible to suppress an increase in the amount of consumption of the reducing agent due to the oversupply of the reducing agent. Also, it is possible to suppress the reducing agent from passing through the catalyst 4.

### [EXPLANATION OF REFERENCE NUMERALS AND CHARACTERS]

- 1: internal combustion engine
- 2: exhaust passage
- 3: injection valve
- 4: catalyst
- 5: dilution device
- 10: ECU
- 11: pressure sensor
- 12: temperature sensor
- 13: ammonia sensor
- 31: supply passage
- 32: storage tank
- 33: auxiliary tank
- 34: pressure regulating valve
- 35: mixing tube
- 36: heating device
- 37: heater
- 38: vaporization device
- 39: cooling water passage
- 40: adjusting valve
- 51: pump
- 52: dilution gas supply pipe

## Claims

1. An exhaust gas purification apparatus for an internal combustion engine which includes:
an exhaust gas purification catalyst (4) that is arranged in an exhaust passage (2) of the internal combustion engine (1);
a tank (32) that stores an additive agent in a solid or a liquid state, which is supplied to said exhaust gas purification catalyst (4) and which acts as a reducing agent or an oxidizing agent;
a vaporization device (38) that vaporizes said solid or liquid additive agent by heating the same; and
a supply passage (31) that connects between said tank (32) and said exhaust passage (2) at the upstream side of said exhaust gas purification catalyst (4), with a gaseous additive agent vaporized by said vaporization device (38) flowing therethrough, wherein the gaseous additive agent vaporized by said vaporization device (38) is supplied to said exhaust passage (2) at the upstream side of said exhaust gas purification catalyst (4);
**characterized in that** said exhaust gas purification apparatus comprises:
a dilution device (5) that dilutes said gaseous additive agent with another gas in said supply passage (31);
a metering device (3) that adjusts in said supply passage (31) an amount of the additive agent to be supplied from said supply passage (31) to said exhaust passage (2) after being diluted by said dilution device (5); and
an adjusting device (36) that is arranged in said supply passage (31) at the upstream side of said metering device (3), for adjusting the temperature or pressure of the additive agent which has been diluted by said dilution device (5).

2. The exhaust gas purification apparatus for an internal combustion engine as set forth in claim 1, wherein
said adjusting device (36) adjusts the temperature or pressure of said additive agent so that the temperature of the additive agent after being diluted by said dilution device (5) becomes higher than a dew point temperature thereof.

3. The exhaust gas purification apparatus for an internal combustion engine as set forth in claim 1 or 2, wherein
said adjusting device (36) adjusts the temperature of the additive agent after being diluted by said dilution device (5), and said adjusting device (36) makes the pressure of the additive agent to be supplied from said supply passage (31) to said exhaust passage (2) lower in cases where the amount of heat required to make the temperature of the additive agent after being diluted by said dilution device (5) higher than the dew point temperature thereof is equal to or greater than a threshold value, than in cases where it is less than the threshold value.

## Patentansprüche

1. Abgasreinigungsvorrichtung für eine Brennkraftmaschine, die Folgendes aufweist:
einen Abgasreinigungskatalysator (4), der in einem Abgasdurchgang (2) der Brennkraftmaschine (1) angeordnet ist;
einen Tank (32), der ein Additiv in einem festen oder einem flüssigen Zustand speichert, das zu dem Abgasreinigungskatalysator (4) zugeführt wird und das als ein Reduktionsmittel oder ein Oxidationsmittel wirkt;
eine Verdampfungsvorrichtung (38), die das feste oder flüssige Additiv durch ein Erwärmen desselben verdampft; und
einen Zuführdurchgang (31), der zwischen dem Tank (32) und dem Abgasdurchgang (2) auf der stromaufwärtigen Seite des Abgasreinigungskatalysators (4) verbindet, wobei ein gasförmiges Additiv, das durch die Verdampfungsvorrichtung (38) verdampft wird, dort hindurch strömt, wobei das gasförmige Additiv, das durch die Verdampfungsvorrichtung (38) verdampft wird, auf der stromaufwärtigen Seite des Abgasreinigungskatalysators (4) zu dem Abgasdurchgang (2) zugeführt wird;
**dadurch gekennzeichnet, dass** die Abgasreinigungsvorrichtung Folgendes aufweist:
eine Verdünnungsvorrichtung (5), die das gasförmige Additiv mit einem anderen Gas in dem Zuführdurchgang (31) verdünnt;
eine Messvorrichtung (3), die in dem Zuführdurchgang (31) eine Menge des Additivs, das von dem Zuführdurchgang (31) zu dem Abgasdurchgang (2) zuzuführen ist, einstellt, nachdem es durch die Verdünnungsvorrichtung (5) verdünnt ist; und
eine Einstellvorrichtung (36), die in dem Zuführdurchgang (31) auf der stromaufwärtigen Seite der Messvorrichtung (3) angeordnet ist, zum Einstellen der Temperatur oder eines Drucks des Additivs, das durch die Verdünnungsvorrichtung (5) verdünnt wurde.

2. Abgasreinigungsvorrichtung für eine Brennkraftmaschine nach Anspruch 1, wobei
die Einstellvorrichtung (36) die Temperatur oder einen Druck des Additivs derart einstellt, dass die Temperatur des Additivs, nachdem es durch die Verdünnungsvorrichtung (5) verdünnt ist, höher als eine Kondensationspunkttemperatur von diesem wird.

3. Abgasreinigungsvorrichtung für eine Brennkraftmaschine nach Anspruch 1 oder 2, wobei
die Einstellvorrichtung (36) die Temperatur des Additivs einstellt, nachdem es durch die Verdünnungsvorrichtung (5) verdünnt ist, und die Einstellvorrichtung (36) den Druck des Additivs, das von dem Zuführdurchgang (31) zu dem Abgasdurchgang (2) zuzuführen ist, in Fällen niedriger macht, in denen der Wärmebetrag, der erforderlich ist, um die Temperatur des Additivs, das durch die Verdünnungsvorrichtung (5) verdünnt ist, höher als die Kondensationspunkttemperatur von diesem zu machen, gleich wie oder größer als ein Schwellenwert ist, als in Fällen, in denen sie geringer als der Schwellenwert ist.

## Revendications

1. Appareil de purification de gaz d'échappement pour un moteur à combustion interne qui comprend :
un catalyseur de purification de gaz d'échappement (4) qui est agencé dans un passage d'échappement (2) du moteur à combustion interne (1) ;
un réservoir (32) qui stocke un agent additif dans un état solide ou liquide, qui est amené audit catalyseur de purification de gaz d'échappement (4) et qui sert d'agent de réduction ou d'agent d'oxydation ;
un dispositif de vaporisation (38) qui vaporise ledit agent additif solide ou liquide en chauffant ce dernier ; et
un passage d'alimentation (31) qui est raccordé entre ledit réservoir (32) et ledit passage d'échappement (2) au niveau d'un côté en amont dudit catalyseur de purification de gaz d'échappement (4), avec un agent additif gazeux vaporisé par ledit dispositif de vaporisation (38) s'écoulant à travers ce dernier, dans lequel l'agent additif gazeux vaporisé par ledit dispositif de vaporisation (38) est amené audit passage d'échappement (2) au niveau du côté en amont dudit catalyseur de purification de gaz d'échappement (4) ;
**caractérisé en ce que** ledit passage de purification de gaz d'échappement comprend :
un dispositif de dilution (5) qui dilue ledit agent additif gazeux avec un autre gaz dans ledit passage d'alimentation (31) ;
un dispositif de dosage (3) qui ajuste, dans ledit passage d'alimentation (31), une quantité d'agent additif à amener dudit passage d'alimentation (31) audit passage d'échappement (2) après avoir été dilué par ledit dispositif de dilution (5) ; et
un dispositif d'ajustement (36) qui est agencé dans ledit passage d'alimentation (31), au niveau du côté en amont dudit dispositif de dosage (3), pour ajuster la température ou la pression de l'agent additif qui a été dilué par ledit dispositif de dilution (5).

2. Appareil de purification de gaz d'échappement pour un moteur à combustion interne selon la revendication 1, dans lequel :
ledit dispositif d'ajustement (36) ajuste la température ou la pression dudit agent additif de sorte que la température de l'agent additif, après avoir été dilué par ledit dispositif de dilution (5), devient supérieure à sa température de point de rosée.

3. Appareil de purification de gaz d'échappement pour un moteur à combustion interne selon la revendication 1 ou 2, dans lequel :
ledit dispositif d'ajustement (36) ajuste la température de l'agent additif après avoir été dilué par ledit dispositif de dilution (5), et ledit dispositif d'ajustement (36) rend la pression de l'agent additif, à amener dudit passage d'alimentation (31) audit passage d'échappement (2), inférieure dans les cas dans lesquels la quantité de chaleur requise pour rendre la température de l'agent additif, après avoir été dilué par ledit dispositif de dilution (5), supérieure à sa température de point de rosée, est égale ou supérieure à une valeur de seuil, que dans les cas dans lesquels elle est inférieure à la valeur de seuil.
